# EUROPEAN PATENT APPLICATION

(11) **EP 1 161 004 A1**
(43) Date of publication of application: **05.12.2001**
(21) Application number: 00304440.1
(22) Date of filing: 25.05.2000
(51) Int. Cl.: H04B 7/26, H04Q 7/38

(54) **Synchronisation of CDMA communication systems**

(71) Applicant: LUCENT TECHNOLOGIES INC., Murray Hill, New Jersey 07974-0636 (US)
(72) Inventor: Costa, Mauro, Chippenham, Wiltshire SN5 6PP (GB); Mastromartino, Emiliano Antonio, Swindon, Wiltshire SN2 3XT (GB); Sivagnanasundaram, Suthaharan, London SW17 9EJ (GB)
(74) Representative: Williams, David John

(57) **Abstract**

A CDMA telecommunications system is disclosed, comprising at least one radio network controller and a plurality of nodes arranged for communication with the network controller, wherein each node is provided with a unique identifier. This identifier can be transmitted with synchronisation messages, to facilitate synchronisation, particularly when a mobile terminal is communicating with several nodes.

## Description

### Field of the Invention

This invention relates to CDMA (Code Division Multiple Access) systems. CDMA is a well known type of telecommunications system and has particular applications in mobile telephone systems. In CDMA systems, multiple data streams from mobile terminals are combined or selected at an access network to improve the link quality of the data passed to the mobile terminal. UMTS (Universal Mobile Telephone System) is a CDMA based system, where selection of the best data path is conducted at a radio network controller (RNC) and this process is known as frame selection. Frame selection may take place on data paths from multiple nodes (known as NodeBs in UMTS) belonging to a single RNC or between data paths from NodeBs belonging to different RNCs. The NodeBs are in effect base stations but one NodeB will be associated with each cell of a cellular telephone system. In order to improve received quality at a mobile terminal, multiple NodeBs may be used to transmit to the mobile terminal and the mobile terminal can combine the various signals to produce an improved signal level. In order to carry out frame selection at the RNC and combination at the mobile terminal, the various NodeBs involved in the transmission and reception of signals to and from the mobile terminal need to by synchronised.

A RNC is able to implicitly identify the NodeBs it serves. The control messages which have been defined up to now, achieve synchronisation between the RNC and NodeBs by implicit identification of the source of messages by the RNC. When NodeBs belonging to different RNCs are involved in communication with a mobile terminal, a serving RNC (SRNC) may be responsible for frame selection (on the uplink) and distribution on the downlink. In such a case, the SRNC sees NodeBs belonging to RNCs (known as drift RNCs) (DRNC) through an Iur interface, which runs between RNCs. In order to synchronise with NodeBs belonging to the DRNC, the SRNC sends synchronisation control messages to the NodeBs over the Iur (UMTS Radio Interface), via the DRNC, which forwards the messages to NodeBs as if the request was originated by the DRNC. The return messages are then forwarded by the DRNC to the SRNC. However, as the SRNC is not able to implicitly identify NodeBs over the Iur and the return messages have no explicit identification, the SRNC is not able to distinguish between replies from different NodeBs.

Accordingly, since each RNC cannot distinguish between replies from different NodeBs attached to a different RNC, it is not possible to obtain direct synchronisation for messages from a NodeB connected to one RNC and intended for a different RNC.

The present invention arose in an attempt to solve this problem.

### Brief Summary of the Invention

According to the present invention there is provided a CDMA telecommunications system comprising at least one radio network controller and a plurality of nodes arranged for communication with the network controller, wherein each node is provided with an identifier.

Preferably, each node is provided with means for adding its identifier to synchronisation messages sent to the radio network controller from the node.

Preferably, the system comprises a plurality of radio network controllers, each arranged for communication with a plurality of nodes, wherein the radio network controllers are adapted to communicate and wherein when one network controller sends a synchronisation control message to a second network controller, it also sends the identifier of the node with which it is currently in communication.

According to the present invention in a second aspect there is provided a method of communication between nodes and network controllers of a CDMA system, comprising providing each node with a unique identifier, and transmitting said identifier with synchronisation messages.

In a third aspect, there is provided A NodeB of a CDMA system, provided with a unique identifier.

### Description of the Drawings

Embodiments of the invention will now be described, by way of example only, with reference to the accompanying drawings in which:
Figure 1 shows schematically a CDMA system; and
Figure 2 shows schematically a mobile terminal in communication with a number of cells.

### Detailed Description of Preferred Embodiments of the Invention

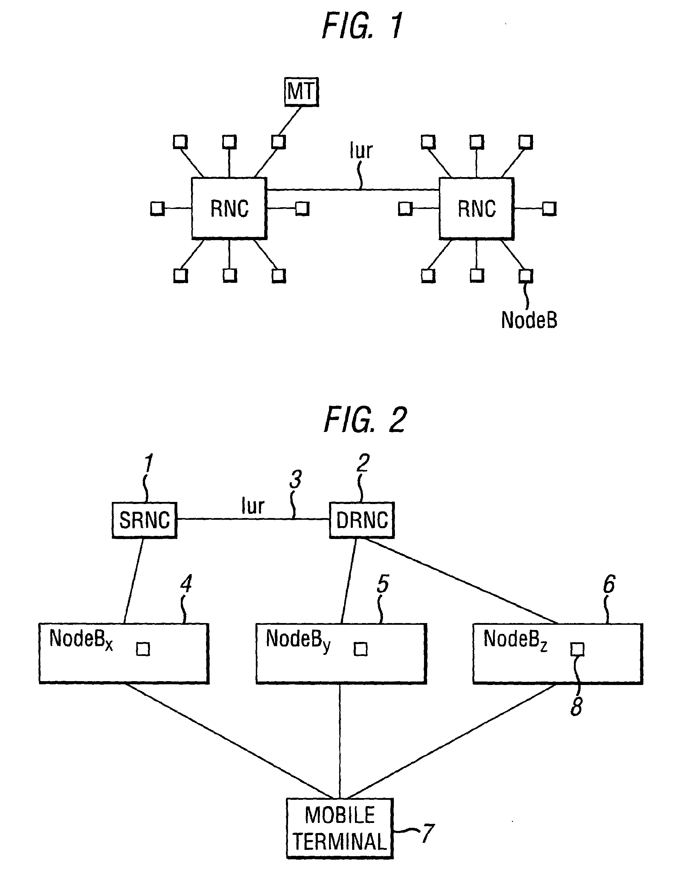

Referring to Figure 2, there is shown a SRNC 1 arranged to communicate over an Iur 3 to a DRNC 2. The SRNC 1 is connected to first NodeB 4 which is given unique identifier x. The DRNC is shown connected to two NodeBs 5 and 6 which are shown as being given respective identifiers y and z.

It should be noted that in embodiments of the invention, although each node may have a separate and completely unique identifier, it may only be necessary for the nodes associated with each RNC to have unique identifiers. Thus, if RNC has identified with it a NodeB having identifier x, the DRNC 2 could also have a node x associated with it. Confusion will not occur because the RNCs have identifiers themselves and so if DRNC 2 sent a message to SRNC 1 concerning its node x, SRNC 1 will know that this node x belongs to RNC 2 and is not its own node x, since it will effectively be identified as [RNC 2, NodeBₓ], to distinguish it from simply [NodeBₓ].

In embodiments of the invention, as described, each NodeB is allocated a unique identifier, such as x, y or z. This unique identifier is added to all synchronisation messages sent in the direction of a RNC from each NodeB. The unique NodeB identifier is also conveyed in synchronisation control messages from the DRNC 2 to the SRNC 1 over the Iur 3.

Thus, each synchronisation control message on the upstream may take the following form in one example;

| | |
|---|---|
| Unique NodeB ID | Synchronisation Control Message |

In the Figure, the mobile terminal 7 is shown as being able to receive signals from data paths from multiple NodeBs associated with both the SRNC and DRNC. The NodeBs 5 and 6 associated with the DRNC can send their unique NodeB identifier to the DRNC. When the DRNC sends synchronisation control messages to the SRNC, it appends, to its own identity, the identity of the respective NodeB. The SRNC 1 can then use this information to properly establish synchronisation with the respective NodeB 5 or 6.

The SRNC is responsible for frame selection (i.e. selection of the best data path) on the uplink, and for distribution on the downlink. In Figure 2, the mobile terminal 7 is involved in communication with NodeBs 4, 5 and 6. NodeBs 5 and 6 send synchronisation messages to the DRNC 2, each of which includes the unique NodeB ID for that NodeB, thus explicitly identifying that NodeB to the DRNC. The SRC sees these NodeBs via the Iur interface 3, but can now explicitly identify each NodeB. The SRC can then send synchronisation control messages addressed individually to each NodeB (e.g. NodeB 5 or 6), over the Iur, but with the identity of the addressed NodeB. These are then forwarded directly to the respective NodeB by the DRNC, and return messages from the respective (identified) NodeB are then forwarded from the DRNC to the SRNC. All the elements are therefore identifiable at each stage in the process and synchronisation is achievable; the SRNC can distinguish between replies from different NodeBs and send appropriate synchronisation messages.

Thus, NodeBs belonging to DRNCs are uniquely and explicitly identifiable by the SRNC.

Accordingly, link quality between the mobile terminal 7 and the network is improved since synchronisation is occurred at the onset itself. There is then no need to rely on the frame synchronisation procedures to correct errors due to unsynchronised operations resulting from the lack of explicit identification.

The SRNC is also able to synchronise with multiple cells belonging to the DRNC simultaneously.

As shown in Figure 2, each NodeB includes a processing means 8 which is provided with the image identifier for the node, for example in a data store (not shown).

## Claims

1. A CDMA telecommunications system comprising at least one radio network controller and a plurality of nodes arranged for communication with the network controller, wherein each node is provided with an identifier.

2. A system as claimed in Claim 1, wherein each node includes means for adding its identifier to synchronisation messages sent to the network controller from the node.

3. A system as claimed in Claim 1 or 2, wherein each node is a NodeB.

4. A system as claimed in any preceding claim, comprising a plurality of radio network controllers, each arranged for communication with a plurality of nodes, wherein the radio network controllers are adapted to communicate and wherein when one network controller sends a synchronisation control message to a second network controller, it also sends the identifier of the node with which it is currently in communication.

5. A system as claimed in Claim 4, wherein the network controllers communicate over a radio interface of a UMTS system.

6. A system as claimed in Claim 4 or Claim 5, wherein the network controllers are an SRNC and at least one DRNC.

7. A system as claimed in any preceding claim, wherein a synchronisation control message takes the form
| | |
|---|---|
| Unique NodeB ID | Synchronisation Control Message |

8. A system as claimed in any preceding claim, including a mobile terminal arranged to communicate with one or more nodes.

9. A method of communication between nodes and network controllers of a CDMA system, comprising providing each node with a unique identifier, and transmitting said identifier with synchronisation messages.

10. A method as claimed in Claim 9, wherein said identifier is transmitted with synchronisation messages from each node to its associated network controller.

11. A method as claimed in Claim 10, wherein said identifier is transmitted with synchronisation control messages from one network controller to another.

12. A method as claimed in any of Claims 9 to 11, wherein each node is a NodeB and the network controllers are RNCs.

13. A NodeB of a CDMA system, provided with a unique identifier.

14. A CDMA system substantially as hereinbefore described with reference to, and as illustrated by, the accompanying drawings.

15. A method of communication between nodes substantially as hereinbefore described with reference to, and as illustrated by, the accompanying drawings.
